# EUROPÄISCHE PATENTSCHRIFT

(11) **EP 2 143 480 B1**
(45) Veröffentlichungstag und Bekanntmachung des Hinweises auf die Patenterteilung: **22.05.2013**
(21) Anmeldenummer: 09164432.8
(22) Anmeldetag: 02.07.2009
(51) Int. Cl.: B01D 63/10, B01D 69/10

(54) **Membranvorrichtung mit Abstandshalterelementen zur Strömungsvergleichmäßigung**
Membrane device with turbulence promoting spacers
Dispositif de membrane avec éléments espaceurs pour l'augmentation de la turbulence

(30) Priorität: 02.07.2008 DE 102008031352
(43) Veröffentlichungstag der Anmeldung: 13.01.2010
(73) Patentinhaber: Melin, Thomas, 6291 AG Vaals (NL)
(72) Erfinder: Melin, Thomas, Prof. Dr., 6291 AG Vaals (NL); Bayer, Christoph, 52062 Aachen (DE); Fritzmann, Clemens, 52064 Aachen (DE)
(74) Vertreter: von Kreisler Selting Werner

(56) Entgegenhaltungen:
- EP-A2- 1 120 150
- WO-A1-89/06566
- WO-A1-2004/112945
- GB-A- 1 592 771
- US-A- 3 922 220
- US-A- 5 628 909

## Beschreibung

Die Erfindung betrifft eine Membranvorrichtung zum Stoffaustausch zwischen Fluiden.

Membranvorrichtungen werden häufig im Rahmen von Trennverfahren eingesetzt. Membranverfahren, wie die Umkehrosmose, die Nanofiltration oder die Elektrodialyse zeichnen sich dadurch aus, dass Sie Komponenten selektiv zurückhalten können bzw. für eine Komponente bevorzugt passierbar sind. Hierbei entstehen allerdings Effekte, die die Leistungsfähigkeit von Membransystemen negativ beeinflussen können. Hierzu zählt beispielsweise die Konzentrationspolarisation, d.h. die Konzentrationsüberhöhung der weniger permeablen Komponente an der Membran. Die Konzentrationsüberhöhung einer Komponente direkt an der Membran verringert das treibende Potenzial des Stofftransports für die bevorzugte, abzutrennende Komponente und die im realen Betrieb zu erreichenden transmembranen Flüsse. Des Weiteren besteht bei Verfahren wie der Umkehrosmoseentsalzung oder der Elektrodialyse die Gefahr, dass in Konzentrat gelöste Salze an der Membran auskristallisieren und damit die Leistungsfähigkeit des Membransystems mit zunehmender Betriebszeit dauerhaft absinkt.

Bei einer Konzentrationspolarisation, z.B. bei der Umkehrosmose oder der Nanofiltration, an einer dichten Membran sind die höchsten Konzentrationen der zurückgehaltenen Komponente an der Oberfläche der aktiven Schicht zu finden.

Die beschriebenen Effekte lassen sich durch verschiedene Ansätze verringern. Die Zumischung von Antiscalants, also von Chemikalien, die den Kristallisationsprozess hemmen, lässt beispielsweise in gewissen Grenzen einen Betrieb in übersättigten Konzentrationsbereichen zu. Weiterhin können sogenannte Spacer oder Abstandshalter zwischen zwei Flachmembranen als statische Mischer fungieren, die die Konzentrationspolarisation innerhalb des Feedraums verringern.

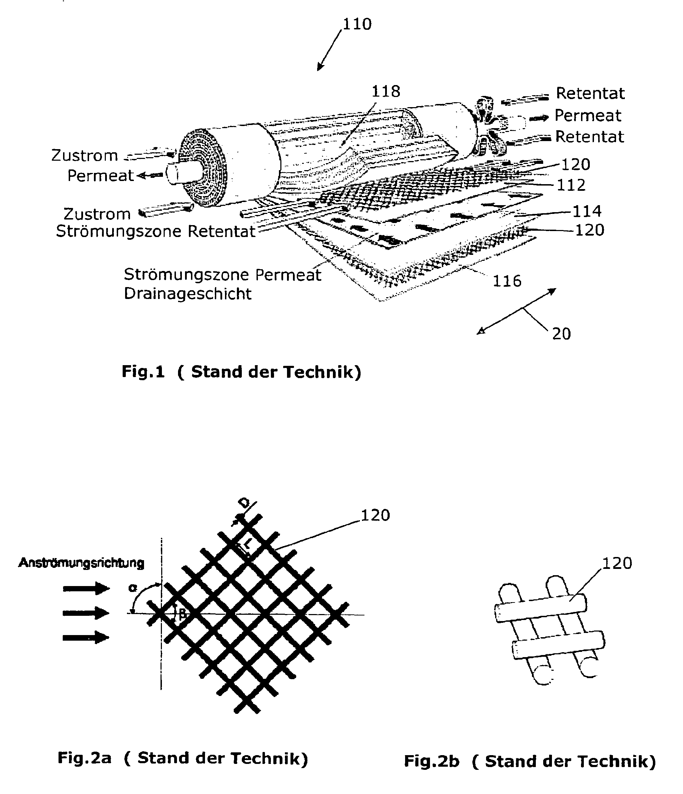

Fig. 1 zeigt ein Spiralwickelmodul, wie es aus dem Stand der Technik bekannt ist und für die Umkehrosmose und Nanofiltration eingesetzt wird. Ein solches Spiralwickelmodul 110 besteht aus mehreren Membrantaschen, die um das sogenannte Permeatsammelrohr 118 gewickelt sind. Die Membrantaschen sind durch die Flachmembranlagen 112, 114 und 116 gebildet. Zwischen und innerhalb der einzelnen Membrantaschen befinden sich die Feed- und Permeatspacer 120. Durch die Spacer 120 werden Kanäle gebildet, durch die Permeat im Inneren der Taschen zum Sammelrohr 118 gelangt und der Feedstrom über die Membran geführt wird. Die Feedspacer 120 sorgen durch Verwirbelungen der Strömung für eine Verringerung der Grenzschicht und der Konzentrationspolarisation. Bisher ist es bekannt, sogenannte Netzspacer zu verwenden, wie sie in Fig. 1 dargestellt sind. Derartige Netzspacer sind zwar relativ einfach herzustellen, können allerdings nur in begrenztem Maße Polarisation verringern. Ferner weisen die bisher verwendeten Spacer Strukturen auf, die quer und längs zur Strömungsrichtung verlaufen. Dies geht insbesondere aus den Fig. 2a und 2b hervor. Die quer verlaufenden Strukturen verringern lokal den Querschnitt des Kanals und schatten damit Teile des Kanalquerschnitts in Strömungsrichtung ab, so dass Bereiche geringerer Überströmungsgeschwindigkeit - sogenannte Totzonen - entstehen, in den partikuläre Substanzen bevorzugt abgelagert werden. In diesen Zonen wird die Membran häufig zugesetzt und fault, was irreparable Schäden an ihr hervorruft.

Aus WO 2004/112945 ist ein Spacer für eine Membranvorrichtung bekannt, der zwei helixförmige Spacerelemente aufweist, die in einem 90°-Winkel zueinander, übereinander und zwischen zwei Flachmembranlagen angeordnet sind. Um den Massentransfer weiter zu verbessern, ist auf der Ober- und Unterseite der Spacerelemente jeweils eine weitere Spacerschicht angeordnet, die eine netzförmige Struktur aufweist. Durch die große Anzahl an quer verlaufenden Spaceretementen erfolgt eine häufige Ablenkung des Fluids in zahlreiche Richtungen. Es entsteht somit eine sehr turbulente, ungleichmäßige Strömung, durch die der Massentransfer durch die Membran erhöht werden soll. Bei gleichem Energieaufwand soll durch die beschriebenen Membranvorrichtung ein um 30% erhöhter Massentransfer möglich sein.

Nachteilig an der genannten Membranvorrichtung ist, dass die dort verwendeten Spacer zahlreiche Komponenten aufweisen, die quer zur Strömungsrichtung verlaufen. Somit entsteht eine sehr ungleichmäßige Strömung, da durch die quer verlaufenden Spacerelemente zahlreiche Totzonen gebildet werden. Sowohl im Hinblick auf die Konzentrationspolarisation als auch auf das Membranfouling weist die beschriebene Membranvorrichtung Nachteile auf.

WO 2004/112 945 A1 beschreibt einen Spacer zur Separation zweier voneinander beabstandeter Membranen. Der Spacer wird aus mehreren helixförmigen Elementen gebildet, die in einem rechten Winkel zueinander verlaufen und zwischen zwei benachbarten Flachmembranlagen angeordnet sind.

WO 89/06 566 beschreibt eine Hohlfasermembran, beispielsweise für eine Dialyseanwendung, wobei die einzelnen Elemente der Membran zylinderförmig ausgebildet sind und an ihrer Außenseite eine helixförmige Finne aufweisen können, durch die eine turbulente Strömung des Fluids verursacht wird. Hierdurch soll der Stoffaustausch verbessert werden.

Aufgabe der Erfindung ist es, eine Membranvorrichtung zu schaffen, die eine verlängerte Lebensdauer der Membran ermöglicht und gleichzeitig einen guten Stoffaustausch, insbesondere bei geringen Druckverlusten, ermöglicht.

Die Aufgabe wird erfindungsgemäß gelöst durch die Merkmale des Anspruchs 1.

Eine Membranvorrichtung zum Stoffaustausch zwischen Fluiden weist mehrere Membranlagen auf, zwischen denen Strömungskanäle ausgebildet sind. Zwischen zwei benachbarten Membranlagen ist ein Strömungsvergleichmäßigungselement angeordnet. Alternativ hierzu kann auch ein Mischelement vorgesehen sein, das entsprechend dem Strömungsvergleichmäßigungselement ausgebildet ist. Als Strömungsvergleichmäßigungselement wird ein Element verstanden, das dazu in der Lage ist, eine gleichmäßige Fluidströmung zu ermöglichen. Als eine gleichmäßige Strömung wird insbesondere eine Strömung mit gleich bleibender Geschwindigkeit unter Vermeidung von Totzonen verstanden. Insbesondere können sich hier lokal die Strömungsanteile in der Strömung nicht aber die Gesamtgeschwindigkeit, beispielsweise in Längsrichtung, ändern. Druckverluste entstehen somit nur noch in Folge der unvermeidlichen und inhärent vorhandenen Reibung im System, jedoch nicht mehr in Folge von Beschleunigungseffekten. Die Druckverluste können hiermit auf ein Minimum reduziert werden, wodurch die Wirtschaftlichkeit der genannten Membranprozesse deutlich verbessert werden kann.

Erfindungsgemäß ist das Strömungsvergleichmäßigungselement durch mehrere helixförmige Abstandhalterelemente gebildet, die parallel zueinander und zur Strömungsrichtung des Fluids verlaufen. Erfindungsgemäß ist mindestens ein Abstandhalterelement rechtsgängig und ein Abstandhalterelement linksgängig ausgebildet.

Erfindungsgemäß verläuft das Strömungsvergleichmäßigungselement im Wesentlichen parallel zur Strömungsrichtung des Fluids. Weiterhin kann das Strömungsvergleichmäßigungselement ausschließlich Strukturen aufweisen, die im Wesentlichen parallel zur Strömungsrichtung des Fluids verlaufen. Hierdurch ist es möglich, Ablagerungen und Fouling weiter zu reduzieren, da abgeschattete Bereiche in Strömungsrichtung vermieden werden. Dies hat zur Folge, dass Membranmodule mit höheren Feststoffbeladungen und höheren transmembranen Flüssen betrieben werden können, was einen wirtschaftlicheren Betrieb als mit herkömmlichen Spacern ermöglicht.

Die helixförmigen Abstandhalterelemente können einen sich in Strömungsrichtung verändernden Durchmesser aufweisen. Als Durchmesser wird die Abmessung des Abstandhalterelements in radialer Richtung verstanden. Ferner kann die Steigung der helixförmigen Abstandhalterelemente in Längsrichtung, d.h. in Strömungsrichtung variieren. Alternativ ist auch ein konstanter Durchmesser und eine konstante Steigung in Strömungsrichtung des Fluids möglich.

Besonders bevorzugt ist das Strömungsvergleichmäßigungselement derart zwischen den benachbarten Flachmembranlagen angeordnet, dass es insbesondere unmittelbar an diesen Flachmembranlagen anliegt. Zwischen dem Strömungsvergleichmäßigungselement und den beiden Flachmembranlagen sind somit vorzugsweise keine weiteren Komponenten, wie netzförmige Spacerelemente, angeordnet. Hierdurch wird eine besonders vorteilhafte Vergleichmäßigung der Strömung ermöglicht.

In einer bevorzugten Ausführungsform sind mindestens ein Abstandhalterelement rechtsgängig und ein Abstandhalterelement linksgängig ausgebildet. Das rechtsgängige und das linksgängige Abstandhalterelement können abwechselnd über- und/ oder nebeneinander angeordnet sein. Auch können die rechts- und linksgängigen Abstandhalterelemente in einer Ebene angeordnet sein. Alternativ oder zusätzlich können rechts- und linksgängige Abstandhalterelemente in unterschiedlichen Ebenen angeordnet sein.

Rechts- und linksgängige Abstandhalterelemente können denselben Wendeldurchmesser aufweisen.

Besonders bevorzugt verlaufen im Querschnitt des Strömungsvergleichmäßigungselements die linksgängigen Abstandhalterelemente parallel zur Membranoberfläche, wenn die rechtsgängigen Abstandhalterelemente im gleichen Querschnitt senkrecht zur Membranoberfläche verlaufen und umgekehrt.

Auch ist es möglich, dass die rechtsgängigen und linksgängigen Abstandhalterelemente an den Stellen parallel zueinander verlaufen, an denen Sie im Querschnitt senkrecht oder parallel zur Membranoberfläche ausgerichtet sind.

Durch die beschriebenen Anordnung gegenseitig gewendelter Abstandhalterelemente wird die Strömung immer wieder geteilt und es erfolgt hierdurch eine bessere Durchmischung der Strömung im Vergleich zu herkömmlichen Spacern. Gleichzeitig kann aber die Entstehung von Totzonen vermieden werden. Es besteht eine geringere Abhängigkeit von den Strömungsbedingungen, was längere und damit wirtschaftlich günstiger zu fertigende Membranmodule ermöglicht. Schließlich wird über die Membran dem Feedkanal Fluid entzogen (z.B. entsalztes Wasser aus Meerwasser), was die Strömung verlangsamt und herkömmliche Spacer schneller unwirksam werden lässt, da Letztere im Wesentlichen ihre Wirksamkeit aus der Verwirbelung der Strömung erhalten und nicht aus der Zerteilung der Strömung, was bei geringeren Überströmungsgeschwindigkeiten - also bei eher laminaren anstelle von turbulenten Strömungsverhältnissen - zu einer deutlichen Abnahme der Wirksamkeit führt.

Besonders bevorzugt sind mehrere Strömungsvergleichmäßigungselemente in einer Richtung senkrecht zur Membranoberfläche übereinander angeordnet. Hierbei können rechts- und linksgängige Abstandhalterelemente jeweils direkt übereinander angeordnet sein.

Die Abstandhalterelemente können als Filamente ausgebildet sein.

Besonders bevorzugt ist es, dass die Strömungskanäle, die zwischen den mehreren Flachmembranlagen gebildet sind, einen Querschnitt aufweisen, der in Strömungsrichtung im Wesentlichen konstant ist.

Zusätzlich zu den bisher beschriebenen Abstandhalterelementen können im Wesentlichen gerade verlaufenden Zusatzfilamente an der Membranoberfläche vorgesehen sein.

Die Erfindung betrifft ferner die Verwendung einer Membranvorrichtung, wie sie in der vorliegenden Anmeldung beschrieben ist, beispielsweise in der Umkehrosmose, der Nanofiltration oder der Elektrodialyse.

Im Folgenden werden bevorzugte Ausführungsformen der Erfindung sowie Membranvorrichtungen, die aus dem Stand der Technik bekannt sind, anhand von Figuren näher erläutert. Es zeigen:
- Fig. 1: eine Membranvorrichtung gemäß dem Stand der Technik,
- Fig. 2a,2b: ein Abstandhalterelement gemäß dem Stand der Technik,
- Fig 3a, 3b: eine Schrägansicht sowie eine Ansicht im Querschnitt einer Ausführungsform des erfindungsgemäßen Strömungsvergleichmäßigungselements,
- Fig. 4a, 4b: eine Schrägansicht und eine Ansicht im Querschnitt einer zweiten Ausführungsform des erfindungsgemäßen Strömungsvergleichmäßigungselements,
- Fig. 5a, 5b: eine Schrägansicht und eine Ansicht im Querschnitt einer dritten Ausführungsform des erfindungsgemäßen Strömungsvergleichmäßigungselements, und
- Fig. 6: eine Ansicht im Querschnitt einer vierten Ausführungsform des erfindungsgemäßen Strömungsvergleichmäßigungselements.

Die Fig. 1 und 2a und 2b wurden bereits in der Beschreibungseinleitung erläutert.

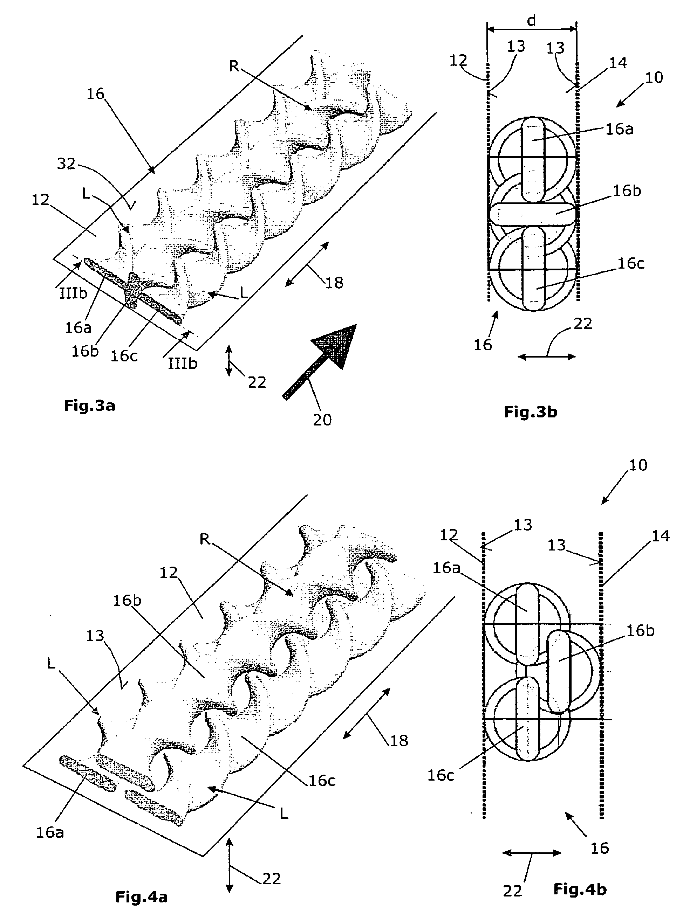

Gemäß Fig. 3a weist eine erste Ausführungsform des erfindungsgemäßen Strömungsvergleichmäßigungselements 16 drei helixförmige, nebeneinander angeordnete Abstandhalterelemente 16a, 16b, 16c auf. Diese verlaufen parallel zueinander und zur Strömungsrichtung 20 des Fluids. Gemäß Fig. 3b sind die Abstandhalterelemente 16a, 16b, 16c zwischen den beiden Flachmembranlagen 12, 14 angeordnet. Fig. 3b stellt den Querschnitt des Strömungsvergleichmäßigungselements 16 am linken unteren Ende gemäß Fig. 3a dar.

Die beiden äußeren Abstandhalterelemente 16a, 16c sind linksgängig, während das mittlere Abstandhalterelement 16b rechtsgängig ist. Im Querschnitt verlaufen die linksgängigen Abstandhalterelemente 16a, 16c parallel zur Membranoberfläche 13, während das rechtsgängige Abstandhalterelement 16b im gleichen Querschnitt senkrecht zur Membranoberfläche 13 verläuft.

In Fig. 4a sind ebenfalls zwei linksgängige Abstandhalterelemente 16a, 16c und ein linksgängiges Abstandhalterelement 16b dargestellt. Wie aus dem Querschnitt in Fig. 4b ersichtlich ist, verlaufen die Abstandhalterelemente 16a, 16b, 16c an den Stellen parallel zueinander, an denen sie im Querschnitt parallel zur Membranoberfläche ausgerichtet sind. Ähnlich verlaufen gemäß Fig. 4a die rechtsgängigen und linksgängigen Abstandhalterelemente 16a, 16b, 16c an den Stellen parallel zueinander, an denen sie im Querschnitt senkrecht zur Membranoberfläche 13 ausgerichtet sind (in Fig. 4b nicht sichtbar). Das mittlere Abstandhalterelement 16b ist in einer Richtung 22 senkrecht zur Membranoberfläche 13 leicht versetzt gegenüber den äußeren Abstandhalterelementen 16a, 16c angeordnet.

Zur Ausbildung einer Membranvorrichtung, wie sie in der Fig. 1 dargestellt ist, werden erfindungsgemäß die in Fig. 1 dargestellten netzförmigen Spacer 120 entfernt und durch ein erfindungsgemäßes Strömungsvergleichmäßigungselement 16 ersetzt. Besonders bevorzugt ist es, mehrere Strömungsvergleichmäßigungselemente 16 in Umfangsrichtung um das Permeatsammelrohr 118 anzuordnen. Insbesondere können zwischen zwei benachbarten Flachmembranlagen (in Fig. 1 112, 114) in Umfangsrichtung durchgängig Strömungsvergleichmäßigungselemente 16 angeordnet sein, die in Strömungsrichtung 20 des Fluids angeordnet sind.

Auch ist es möglich, dass mehrere Strömungsvergleichmäßigungselemente 16 in einer Richtung 22 senkrecht zur Membranoberfläche 13 übereinander und zwischen zwei benachbarten Flachmembranlagen 112, 114 oder 12, 14 angeordnet sind. Hierbei können beispielsweise rechts- und linksgängige Abstandhalteelemente 16a, 16b, 16c jeweils direkt übereinander angeordnet sein.

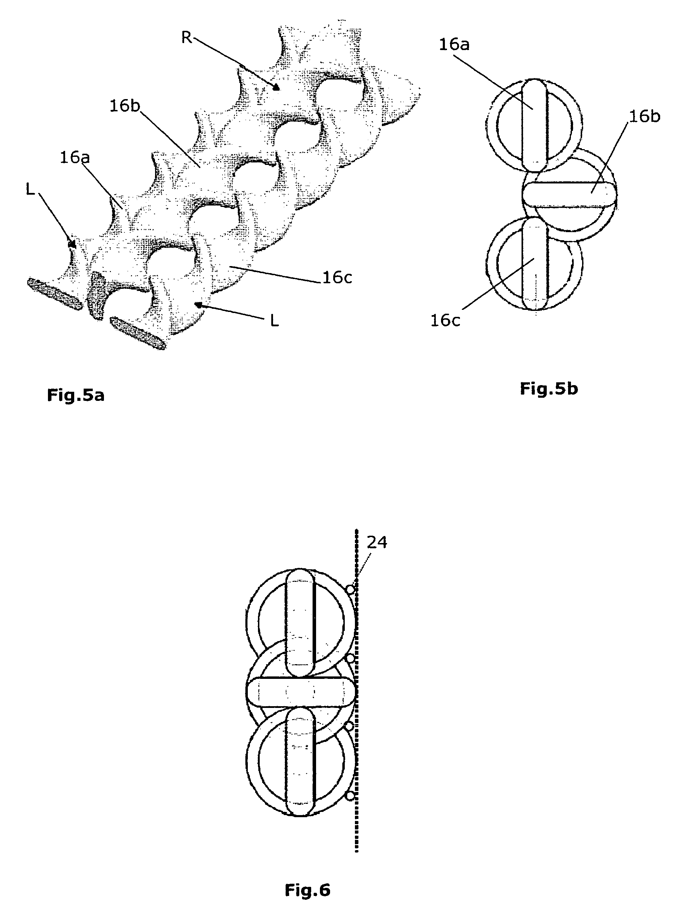

Die Fig. 5a ähnelt in ihrem Aufbau der Fig. 4a, wobei das rechtsgewendelte Abstandhalterelement 16b in einem Versatz um 90° verdreht angeordnet ist (siehe Fig. 5b), so dass sich eine weniger dichte Packung als gemäß Fig. 4a ergibt.

In Fig. 6 ist die Ausführungsform gemäß den Fig. 3a und 3b dargestellt, wobei parallel zur Strömungsrichtung 20 im Wesentlichen gerade verlaufende Zusatzfilamente 24, die unmittelbar an der Membranoberfläche 13 anliegen, verlaufen. Diese erzeugen eine grenzschichtverringernde Turbulenz direkt an der Membranoberfläche bei gleichzeitiger Minimierung der Foulingneigung gegenüber bisher bekannten Spacern infolge ihrer Ausrichtung in Hauptströmungsrichtung.

Die Abstandhalterelemente des Strömungsvergleichmäßigungselements 16 müssen nicht zwingend helixförmig ausgebildet sein. Vielmehr ist es ausreichend, dass durch die Abstandhalterelemente 16a, 16b, 16c ein vorzugsweise konstanter Abstand zwischen den zwei Membranenlagen 12, 14, die einander benachbart sind, eingehalten wird. Weiterhin soll durch die Abstandhalterelemente 16a, 16b, 16c die Strömung vorzugsweise derart abgelenkt werden, dass ein verbesserter Stofftransport zur Membran 12, 14 erfolgt. Bei den bisher beschriebenen Ausführungsformen wird das Fluid entlang eines helixförmigen Verlaufs transportiert. Jedoch ist es auch möglich, die möglich, die Abstandhalterelemente 16a, 16b, 16c derart anzuordnen, dass das Fluid beispielsweise in einen zickzackförmigen Verlauf senkrecht zwischen oder aber parallel zu den zwei benachbarten Flachmembranlagen 12, 14 gezwungen wird. Anstelle eines zickzackförmigen Verlaufs der Abstandhalterelemente 16a, 16b, 16c ist auch ein wellenförmiger Verlauf solcher Elemente möglich. Wichtig ist, dass in allen Ausführungsformen eine Vergleichmäßigung der Strömung des Fluids stattfindet.

In allen Ausführungsformen der Erfindung ist es möglich, dass die Abstandhalterelemente 16a, 16b, 16c einen beliebigen, insbesondere einen sich in seiner Form in Strömungsrichtung 20 verändernden Querschnitt aufweisen. Neben dem in den Fig. dargestellten Querschnitt ist beispielsweise ein rautenförmiger, ein rechteckiger, ein annähernd quadratischer, ein dreieckförmiger, ein wellenförmiger usw. Querschnitt möglich. Insbesondere kann der Querschnitt der Abstandhalterelemente 16a, 16b, 16c derart gewählt werden, dass die Strömung des Fluids in vorteilhafter Weise beeinflusst wird. Besonders vorteilhaft kann es hierbei sein, dass die Abstandhalterelemente 16a, 16b, 16c in Längsrichtung, d.h. in Strömungsrichtung 20 des Fluids verlaufende Rillen oder Ausnehmungen aufweisen.

## Patentansprüche

1. Membranvorrichtung zum Stoffaustausch zwischen Fluiden, mit
mehreren Membranlagen (12, 14), zwischen denen Strömungskanäle ausgebildet sind, und
einem Strömungsvergleichmäßigungselement (16), das zwischen zwei benachbarten Flachmembranlagen (12, 14) angeordnet ist,
**dadurch gekennzeichnet, dass**
das Strömungsvergleichmäßigungselement (16) durch mehrere helixförmige Abstandhalterelemente (16a, 16b, 16c) gebildet ist, die zwischen zwei Membranlagen (12, 14) angeordnet sind und die parallel zueinander und zur Strömungsrichtung (20) des Fluids verlaufen,wobei das Strömungsvergleichmäßigungselement (16) in Längsrichtung (18) im Wesentlichen parallel zur Strömungsrichtung (20) des Fluids verläuft und
mindestens ein Abstandhalterelement (16b) rechtsgängig und ein Abstandhalterelement (16a, 16c) linksgängig ausgebildet ist.

2. Membranvorrichtung nach Anspruch 1, **dadurch gekennzeichnet, dass** mindestens eine der Flachmembranlagen (12, 14) am Strömungsvergleichmäßigungselement (16) anliegt.

3. Membranvorrichtung nach Anspruch 1 oder 2, **dadurch gekennzeichnet, dass** rechtsgängige Abstandhalterelemente (16b) und linksgängige Abstandhalterelemente (16a, 16c) abwechselnd über- und/oder nebeneinander angeordnet sind.

4. Membranvorrichtung nach einem der Ansprüche 1 bis 3, **dadurch gekennzeichnet, dass** rechts- und linksgängige Abstandhalterelemente (16a, 16b, 16c) in einer Ebene oder in unterschiedlichen Ebenen angeordnet sind.

5. Membranvorrichtung nach einem der Ansprüche 1 bis 4, **dadurch gekennzeichnet, dass** rechts- und linksgängige Abstandhalterelemente (16a, 16b, 16c) denselben Wendeldurchmesser (d) und/ oder dieselbe Wendelhöhe aufweisen.

6. Membranvorrichtung nach Anspruch 4 oder 5, **dadurch gekennzeichnet, dass** im Querschnitt des Strömungsvergleichmäßigungselements (16) die linksgängigen Abstandhalterelemente (16a, 16c) parallel zur Membranoberfläche (13) verlaufen, wenn die rechtsgängigen Abstandhalterelemente (16b) im gleichen Querschnitt senkrecht zur Membranoberfläche (13) verlaufen und umgekehrt.

7. Membranvorrichtung nach Anspruch 4 oder 5, **dadurch gekennzeichnet, dass** die rechtsgängigen und die linksgängigen Abstandhalterelemente (16a, 16b, 16c) an den Stellen parallel zueinander verlaufen, an denen sie im Querschnitt senkrecht oder parallel zur Membranoberfläche (13) ausgerichtet sind.

8. Membranvorrichtung nach einem der Ansprüche 1 bis 7, **dadurch gekennzeichnet, dass** mehrere Strömungsvergleichmäßigungselemente (16) in einer Richtung (22) senkrecht zur Membranoberfläche (13) übereinander angeordnet sind, wobei vorzugsweise rechts- und linksgängige Abstandhalterelemente (16a, 16b, 16c) jeweils direkt übereinander angeordnet sind.

9. Membranvorrichtung nach einem der Ansprüche 1 bis 8, **gekennzeichnet durch** im Wesentlichen gerade verlaufende Zusatzfilamente (24) an der Membranoberfläche (13).

10. Verwendung einer Membranvorrichtung nach einem der Ansprüche 1 bis 9 zum Durchführen einer Umkehrosmose, einer Nanofiltration und/ oder einer Elektrodialyse.

## Claims

1. A membrane device for the transfer of substances between fluids, comprising:
a plurality of membrane layers (12, 14) between which flow channels are formed, and
a flow equalization element (16) arranged between two adjacent flat membrane layers (12, 14),
**characterized in that**
the flow equalization element (16) is formed by a plurality of helical spacer elements (16a, 16b, 16c) arranged between two membrane layers (12, 14) and extending in parallel with each other and with the flow direction (20) of the fluid, wherein the flow equalization element (16) extends in the longitudinal direction (18) substantially in parallel with the flow direction (20) of the fluid, and
at least one spacer element (16b) is formed as a right hand element and one spacer element (16a, 16c) is formed as a left hand element.

2. The membrane device of claim 1, **characterized in that** at least one of the flat membrane layers (12, 14) contacts the flow equalization element (16).

3. The membrane device of claim 1 or 2, **characterized in that** right hand spacer elements (16b) and left hand spacer elements (16a, 16c) are arranged alternately one upon the other and/or side by side.

4. The membrane device of one of claims 1 to 3, **characterized in that** right and left hand spacer elements (16a, 16b, 16c) are arranged in one plane or in different planes.

5. The membrane device of one of claims 1 to 4, **characterized in that** the right and left hand spacer elements (16a, 16b, 16c) have the same helix diameter (d) and/or helix height.

6. The membrane device of claim 4 or 5, **characterized in that**, in cross section of the flow equalization element (16), the left hand spacer elements (16a, 16c) extend in parallel with the membrane surface (13), when, in the same cross section, the right hand spacer elements (16b) extend perpendicularly to the membrane surface (13), and vice versa.

7. The membrane device of claim 4 or 5, **characterized in that** the right hand and the left hand spacer elements (16a, 16b, 16c) extend in parallel with each other at those places where, in cross section, they are directed perpendicularly or in parallel with the membrane surface (13).

8. The membrane device of one of claims 1 to 7, **characterized in that** a plurality of flow equalization elements (16) is arranged in one direction (22) in a manner perpendicular to the membrane surface (13) and one above the other, wherein, preferably, right and left hand spacer elements (16a, 16b, 16c) are respectively arranged immediately above each other.

9. The membrane device of one of claims 1 to 8, **characterized by** substantially straight auxiliary filaments (24) on the membrane surface (13).

10. Use of a membrane device of one of claims 1 to 9 for performing reverse osmosis, nanofiltration and/or electrodialysis.

## Revendications

1. Dispositif de membranes pour l'échange de substances entre des fluides, comprenant
plusieurs installations de membranes (12, 14) entre lesquelles sont réalisés des conduits d'écoulement, et
un élément d'égalisation d'écoulement (16) qui est disposé entre deux installations de membranes plates (12, 14),
**caractérisé en ce que**
l'élément d'égalisation d'écoulement (16) est formé de plusieurs éléments d'espacement (16a, 16b, 16c) en forme d'hélice qui sont disposés entre deux installations de membranes (12, 14) et qui sont parallèles entre eux et à la direction d'écoulement (20) du fluide, l'élément d'égalisation d'écoulement (16) étant placé dans la direction longitudinale (18) sensiblement parallèlement à la direction d'écoulement (20) du fluide, et
au moins un élément d'espacement (16b) étant réalisé avec un pas à droite et un élément d'espacement (16a, 16c) avec un pas à gauche.

2. Dispositif de membranes selon la revendication 1, **caractérisé en ce qu'**au moins une des installations de membranes planes (12, 14) est adjacente à l'élément d'égalisation d'écoulement (16).

3. Dispositif de membranes selon la revendication 1 ou 2, **caractérisé en ce que** des éléments d'espacement (16b) à pas à droite et des éléments d'espacement (16a, 16c) à pas à gauche sont disposés alternativement les uns au-dessus des autres et/ou les uns à côté des autres.

4. Dispositif de membranes selon une des revendications 1 à 3, **caractérisé en ce que** des éléments d'espacement (16a, 16b, 16c) à pas à droite et à gauche sont disposés dans un plan ou dans différents plans.

5. Dispositif de membranes selon une des revendications 1 à 4, **caractérisé en ce que** des éléments d'espacement (16a, 16b, 16c) à pas à droite et à gauche présentent le même diamètre d'hélice (d) et/ou la même hauteur d'hélice.

6. Dispositif de membranes selon la revendication 4 ou 5, **caractérisé en ce que**, dans la section transversale de l'élément d'égalisation d'écoulement (16), les éléments d'espacement (16a, 16c) à pas à gauche sont parallèles à la surface de membrane (13) quand les éléments d'espacement (16b) à pas à droite dans la même section transversale sont perpendiculaires à la surface de membrane (13) et inversement.

7. Dispositif de membranes selon la revendication 4 ou 5, **caractérisé en ce que** les éléments d'espacement (16a, 16b, 16c) à pas à droite et à pas à gauche sont parallèles entre eux aux endroits où, dans la section transversale, ils sont orientés perpendiculairement ou parallèlement à la surface de membrane (13).

8. Dispositif de membranes selon une des revendications 1 à 7, **caractérisé en ce que**, dans une direction (22) perpendiculaire à la surface de membrane (13), plusieurs éléments d'égalisation d'écoulement (16) sont disposés les uns au-dessus des autres, des éléments d'espacement (16a, 16b, 16c) à pas à droite et à gauche étant de préférence disposés respectivement directement les uns au-dessus des autres.

9. Dispositif de membranes selon une des revendications 1 à 8, **caractérisé par** des filaments supplémentaires (24) sensiblement rectilignes sur la surface de membrane (13).

10. Utilisation d'un dispositif de membranes selon une des revendications 1 à 9 pour la réalisation d'une osmose inverse, d'une nanofiltration et/ou d'une électrodialyse.
